# EUROPÄISCHE PATENTANMELDUNG

(11) **EP 3 825 243 A1**
(43) Veröffentlichungstag der Anmeldung: **26.05.2021**
(21) Anmeldenummer: 20207003.3
(22) Anmeldetag: 11.11.2020
(51) Int. Cl.: B65D 1/02, B29C 49/48, B65D 1/44, B65D 1/46, B65D 79/00, B29K 67/00, B29L 31/00

(54) **BEHÄLTER ZUR AUFNAHME VON FLÜSSIGKEITEN**

(30) Priorität: 21.11.2019 DE 102019131426
(71) Anmelder: E-proPLAST GmbH, 98574 Schmalkalden (DE)
(72) Erfinder: Löhl, Rüdiger, 98574 Schmalkalden (DE)
(74) Vertreter: Klickow & Wetzel PartGmbB

(57) **Zusammenfassung**

Der Behälter (1) dient zur Aufnahme von Flüssigkeiten und ist im Wesentlichen aus einem thermoplastischen Material ausgebildet. Eine Behälterwandung ist mindestens bereichsweise mit einer rippenartigen Struktur (10) versehen. Die Behälterwandung weist in einer horizontalen Querschnittsfläche einen oval artigen Verlauf auf. Der Behälter ist mit zwei einander gegenüberliegenden gewölbten Längsseiten (6, 7) und zwei einander gegenüber liegenden gewölbten Querseiten (8, 9) versehen. Im Bereich mindestens einer der Längsseiten ist die rippenartige Struktur (10) derart ausgebildet, dass diese mindestens bereichsweise eine geschlossen umlaufend gestaltete Versteifungsrippe aufweist.

## Beschreibung

Die Erfindung betrifft einen Behälter zur Aufnahme von Flüssigkeiten, der im Wesentlichen aus einem thermoplastischen Material ausgebildet ist und bei dem eine Behälterwandung mindestens bereichsweise mit einer rippenartigen Struktur versehen ist und wobei die Behälterwandung in einer horizontalen Querschnittfläche einen oval artigen Verlauf derart aufweist, dass der Behälter zwei einander gegenüberliegende gewölbte Längsseiten und zwei einander gegenüberliegende gewölbte Querseiten aufweist.

Behälter zur Aufnahme von Flüssigkeiten werden insbesondere im Bereich der Lebensmittelindustrie in sehr unterschiedlichen Ausführungsformen verwendet. Die Behälter sind typischerweise als Flasche ausgebildet und besitzen einen Verschluss. In die Behälter werden beispielsweise Fruchtsäfte, Soßen und Sirupe abgefüllt.

Bei Lebensmittelprodukten ist es zur Abtötung oder zumindest zur Reduzierung von Keimen oder Bakterien oder von Hefen erforderlich, dass diese in einem heißen Zustand abgefüllt werden. Häufig erfolgt eine derartige Heißabfüllung in einem Temperaturbereich von etwa 85° bis 87°Celsius.

Als thermoplastisches Material für derartige Behälter wird häufig PET (Polyethylenterephtalat) verwendet. Behälter aus einem derartigen Material sind nicht ohne weiteres für eine Heißabfüllung geeignet, da das zuvor durch eine Blasformung hergestellte Material zu einem Rückschrumpfen neigt. Zur Unterstützung einer Heißabfüllbarkeit kann der Behälter während der Blasformung einer speziellen Kristallisation zur Erhöhung der Materialstabilität unterworfen werden, alternativ oder ergänzend ist es auch möglich, die Behälterwandung mit spezifischen Profilierungen zu versehen.

Ein weiteres Problem bei der Heißabfüllung von Flüssigkeiten besteht darin, dass die abgefüllte Flüssigkeit und gegebenenfalls in einem Kopfraum des Behälters befindliche Luft bei der Abkühlung einer Volumenverminderung unterworfen sind. Auch diese Kontraktion kann dazu führen, dass der Behälter ohne geeignete Maßnahmen einer Deformierung unterworfen wird.

Eine bekannte Maßnahme zur Verhinderung oder Reduzierung einer derartigen Deformierung besteht darin, im Bereich von Seitenwandungen des Behälters stabilere Bereiche und weniger stabile Bereiche anzuordnen. Die Verformung kann hierdurch auf die weniger stabilen Bereiche konzentriert werden, sodass die Grundform des Behälters nicht beeinträchtigt wird. Die weniger stabilen Bereiche sind hierbei als sogenannte Spiegelflächen ausgebildet, die bei einer Kontraktion des Füllgutes in Richtung auf den Flascheninnenraum eingezogen werden. Die stabilen rippenartigen Bereiche werden hingegen nicht wesentlich verformt, sodass die Grundstruktur des Behälters erhalten bleibt.

Weitere Maßnahmen zur Erhöhung der Stabilität des Behälters werden häufig im Bereich eines Bodens des Behälters realisiert. Auch hier sind bereits spezielle Rippenstrukturen bekannt. Im Bodenbereich erweist es sich als besonders kritisch, dass bei der Abfüllung des heißen Füllgutes das heiße Füllgut zunächst unmittelbar auf den Boden auftrifft.

Bedingt durch das Produktionsverfahren, durch Blasen mit der sogenannten Heatset-Technologie, weist der Flaschenboden nach dem Blasvorgang die geringste Kristallinität im Flaschenkörper auf. Daher ist eine Rippen-Struktur des Bodens unabdingbar.

Alternativ zu den vorstehend erläuterten Maßnahmen zur strukturellen Stabilitätsverbesserung des Behälters ist es auch bereits bekannt, in den bereits abgefüllten Behälter vor einem Verschließen flüssigen Stickstoff hinzu zu dosieren und hierdurch ein zusätzlichen Innendruck nach dem Verschließen aufzubauen.

Die Anwendung einer derartigen Technik ist aber derzeit auf im Wesentlichen runde Behälterformen begrenzt, da ansonsten der Innendruck zu einer Verformung des Behälters führen könnte.

Die vorstehend beschriebene Technik zur Erzeugung eines Überdruckes lässt sich insbesondere nicht bei ovalen Flaschen aus Kunststoff anwenden. Insbesondere sind bei diversen Anwendungen spezielle Verschlüsse vorgesehen, die einem inneren Überdruck nicht standhalten könnten.

Auch die vorstehend bereits grundsätzlich erwähnte Möglichkeit zur Verwendung von Verstärkungsrippen im Bereich von Wandungen des Behälters unterliegt diversen Einschränkungen. Beispielsweise können bestimmte Rippenstrukturen ihrerseits wieder eine Verformung des Behälters begünstigen. Darüber hinaus schränkt die Verwendung bekannter rippenartiger Strukturen Möglichkeiten zur Anbringung von Etiketten auf den Behältern ein.

In den Zeichnungen sind Ausführungsbeispiele der Erfindung schematisch dargestellt.
Es zeigen:
- Figur 1: eine Seitenansicht eines erfindungsgemäßen Behälters mit Blick auf eine Längsseite des Behälters,
- Figur 2: eine Seitenansicht gemäß Blickrichtung II - II in Figur 1 und
- Figur 3: eine Blickrichtung auf einen Boden des Behälters gemäß Blickrichtung III in Figur 1,
- Figur 4: eine vergrößerte Darstellung zur Veranschaulichung der Geometrie der Flaschenwandung im Bereich der Verrippungen.

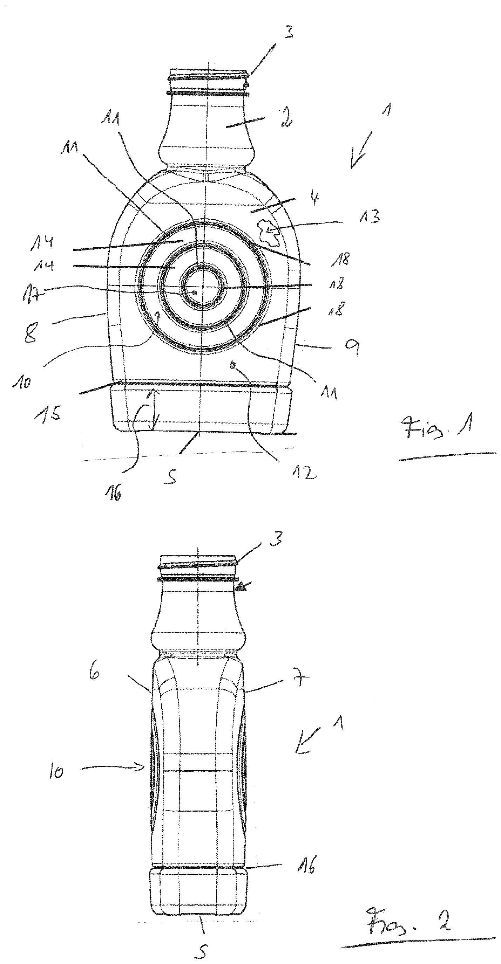

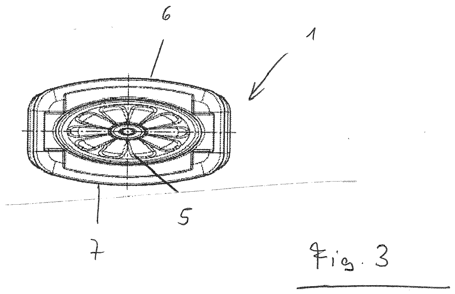

Gemäß der Ausführungsform in Figur 1 bis Figur 3 ist ein Behälter (1) flaschenartig ausgebildet und besteht aus einem Kunststoff. Bevorzugt ist eine Verwendung von Polyethylenterephtalat gedacht. Verwendbar sind aber auch andere Kunststoffe, beispielsweise Polypropylen.

Der Behälter (1) besitzt einen Hals (2) mit einem Verschlussgewinde (3). Der Behälter (1) besitzt eine Seitenwandung (4) und einen Boden (5). Die in einer horizontalen Querschnittfläche oval artige Gestaltung des Behälters (1) wird dadurch erreicht, dass sowohl zwei einander gegenüberliegende nach außen gewölbten Längsseiten (6, 7) als auch zwei ebenfalls einander im Wesentlichen gegenüberliegende und nach außen gewölbte Querseiten 8 9 verwendet sind. Die Längsseiten (6, 7) besitzen hierbei in der bereits erwähnten horizontalen Querschnittfläche eine größere Länge als die Querseiten (8, 9).

Im Bereich mindestens einer der Längsseiten (6, 7) ist eine rippenartige Struktur (10) angeordnet. Die rippenartige Struktur (10) umfasst mindestens eine kreisartig gestaltete Versteifungsrippe (11). Gemäß dem dargestellten Ausführungsbeispiel ist die Versteifungsrippe (11) als eine nutartige Vertiefung ausgebildet, die sich ausgehend von einer Wandungsoberfläche (12) des Behälters (1) in einen Innenraum (13) des Behälters (1) hinein erstreckt.

Gemäß dem dargestellten Ausführungsbeispiel erstrecken sich zwischen jeweils zwei kreisartigen Versteifungsrippen (11) Abstandsbereiche (14). Die Abstandsbereiche (14) sind im Wesentlichen eben ausgebildet, wobei die Charakterisierung "eben" um hierbei auch die durch die Außenkontur des Behälters (1) definierte gewölbte Gestaltung umfasst.

Nach einer Befüllung des Behälters (1) ist vorgesehen, dass im Bereich des Verschlussgewindes (3) ein nicht dargestellter Verschluss aufgeschraubt wird. In einem Außenbereich des Behälters (1) kann ein Etikett angebracht werden.

Durch die vorzugsweise konzentrisch angeordneten kreisförmigen Versteifungsrippen (11) werden durch eine Volumenkontraktion des Füllgutes verursachte Kräfte gleichmäßig in die Wandung des Behälters (1) eingeleitet.

Zur weiteren Erhöhung der Stabilität des Behälters (1) in einem in nutrechter Richtung unteren Bereich ist vorgesehen, mit einem Abstand (15) oberhalb des Bodens (5) eine umlaufende Vertiefung (16) anzuordnen.

Die Anordnung der im Ausführungsbeispiel veranschaulichten Mehrzahl von kreisartigen Versteifungsrippen (11) in der dargestellten konzentrischen Anordnung verleiht der Wandung des Behälters (1) im betreffenden Bereich membranartige Eigenschaften. Der Körper des Behälters (1) kann sich hierdurch gleichmäßig verformen. Gemäß einem üblichen Verfahrensablauf bei der Durchführung der Heißabfüllung weitet sich der Körper des Behälters (1) kurz nach der Befüllung etwas auf und zieht sich dann im folgenden Abkühlprozess wieder zusammen. Die kreisförmigen konzentrischen Verläufe der Versteifungsrippen (11) begünstigen einen gleichmäßigen Ablauf dieses Vorganges und verhindern eine Schwächung des Körpers des Behälters (1).

Durch die Dimensionierung der kreisartigen Versteifungsrippen (11) lässt sich die Steifigkeit des Behälters (1) beeinflussen. Insbesondere können die Breiten, die Tiefen sowie die Neigungen und Krümmungen der Versteifungsrippen (11) variiert werden. Ebenfalls ist es möglich, ein von den Versteifungsrippen (11) umschlossenes Zentrum (17) mit einer geringeren Wanddicke als den Wandungsbereich außerhalb der Versteifungsrippen (11) auszubilden.

Zur Erhöhung einer Haftfähigkeit eines gegebenenfalls verwendeten Etikettes ist es möglich, eine oder mehrere konzentrische Vertiefungen (18) unterhalb des betreffenden Etikettes anzuordnen.

In einer Abkühlphase im Anschluss an die Heißbefüllung des Behälters (1) wird durch die Volumenkontraktionen des Füllgutes innerhalb des Behälters (1) ein Unterdruck erzeugt. Der atmosphärische Außendruck übt hierdurch eine Kraft auf den Behälter (1) aus und die Kraft kann eine Verformung des Behälters in Richtung auf dessen Innenraum (13) begünstigen. Durch die konzentrische Anordnung der Versteifungsrippen (11) ergibt sich das kreisförmige Zentrum (17) sowie halbkreisförmige Flächen. Diese Flächen besitzen in Relation zu den kreisförmigen Versteifungsrippen (11) eine geringere Stabilität, sodass die Verformung gezielt im Bereich der weniger stabilen Bereiche eingeleitet wird.

Die konzentrischen Versteifungsrippen (11) ermöglichen es darüber hinaus, durch eine geeignete Wahl der jeweiligen Tiefen eine Auswölbung des Etikettenfeldes nach außen zu reduzieren.

Die Abstandsbereiche (14), die ebenfalls im wesentlichen kreisringförmig verlaufen, stellen weitere labile Zonen im Bereich der Wandung des Behälters (1) bereit, die sich bei der Durchführung des Abkühlvorganges gezielt in Richtung auf den Innenraum (13) des Behälters (1) verformen können und hierdurch die Volumenverringerung des Füllgutes ausgleichen.

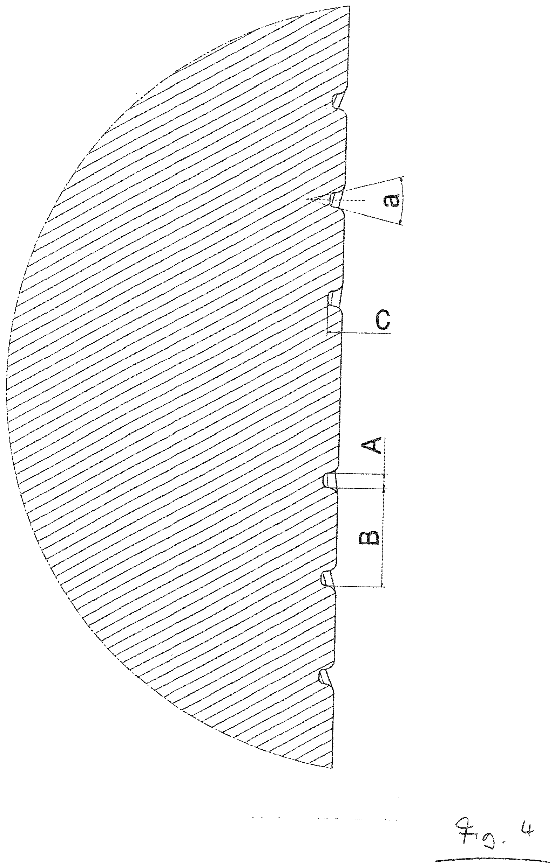

Figur 4 veranschaulicht in einer vergrößerten Darstellung die Geometrie der Versteifungsrippen (11). Zur Erreichung der gewünschten Stabilität besitzen die Versteifungsrippen (11) eine spezielle Breite, eine spezielle Tiefe sowie definierte Verläufe von Neigungen und Wandungen. Ebenfalls ist ein Abstand der Versteifungsrippen (11) voneinander von Bedeutung für die Stabilität.

Die Seitenwandungen der Versteifungsrippen (11) weisen eine Neigung mit einem Winkel a auf. Der Winkel a liegt typischerweise in einem Bereich von 20° Grad bis 60° Grad. Das Verhältnis einer Nuttiefe C zu einer Nutbreite A liegt typischerweise in einem Bereich von 0,5 bis 2,0.

Das Verhältnis eines Nutabstandes B zur Nutbreite A liegt typischerweise in einem Bereich von 6,0 bis 8,0.

Hinsichtlich der vorstehenden Dimensionierungsangaben ist zu berücksichtigen, dass unterschiedliche Bereiche der Versteifungsrippen (11) typischerweise durch gerundete Verläufe ineinander übergeleitet sind. In Abhängigkeit von der konkreten Dimensionierung der entsprechenden gerundeten Verläufe können die vorstehenden Wertebereiche leicht variieren.

Der vorstehend mehrfach verwendete Begriff der umlaufenden Gestaltung der versteifungsrippen (11) bedeutet insbesondere ein Umlauf in der von der Seitenwand (4) des Behälters (1) aufgespannten Fläche. Die umlaufende Gestaltung führt zu einem in dieser Fläche geschlossenen Verlauf der Versteifungsrippe (11). Die Versteifungsrippe (11) ist somit insbesondere bei einer Ausbildung als Vertiefung trotz der geschlossen umlaufenden Gestaltung nach außenweisend offen. Bei einer Ausbildung als vorstehende Verrippung ist in gleicher Weise eine in Richtung auf den Innenraum (13) des Behälters (1) offene Gestaltung mit umfasst.

## Patentansprüche

1. Behälter zur Aufnahme von Flüssigkeiten, der im Wesentlichen aus einem thermoplastischen Material ausgebildet ist und bei dem eine Behälterwandung mindestens bereichsweise mit einer rippenartigen Struktur versehen ist und wobei die Behälterwandung in einer horizontalen Querschnittfläche einen oval artigen Verlauf derart aufweist, dass der Behälter (1) zwei einander gegenüberliegende gewölbte Längsseiten (6, 7) und zwei einander gegenüberliegende gewölbte Querseiten (8, 9) aufweist, **dadurch gekennzeichnet, dass** im Bereich mindestens einer der Längsseiten (6, 7) die rippenartige Struktur (10) mindestens eine mit einem geschlossenen Umlauf gestaltete Versteifungsrippe (11) aufweist.

2. Behälter nach Anspruch 1, **dadurch gekennzeichnet, dass** als thermoplastisches Material PET verwendet ist.

3. Behälter nach Anspruch 1 oder 2, **dadurch gekennzeichnet, dass** die rippenartige Struktur (10) im Bereich beider Längsseiten (6, 7) des Behälters (1) angeordnet ist.

4. Behälter nach einem der Ansprüche 1 bis 3, **dadurch gekennzeichnet, dass** mindestens eine Versteifungsrippe (11) als eine nutartige Vertiefung ausgehend von einer Wandungsoberfläche (12) ausgebildet ist.

5. Behälter nach einem der Ansprüche 1 bis 4, **dadurch gekennzeichnet, dass** der Behälter (1) flaschenartig ausgebildet ist.

6. Behälter nach einem der Ansprüche 1 bis 5, **dadurch gekennzeichnet, dass** der Behälter (1) heiß abfüllbar ausgebildet ist.

7. Behälter nach einem der Ansprüche 1 bis 6, **dadurch gekennzeichnet, dass** jeweils zwischen zwei Versteifungsrippen (11) flache Abstandsbereiche (14) angeordnet sind.

8. Behälter nach einem der Ansprüche 1 bis 7, **dadurch gekennzeichnet, dass** die rippenartige Struktur (10) ein flaches Zentrum (17) derart aufweist, dass das flache Zentrum (17) konzentrisch von mindestens einer Versteifungsrippe (11) umgeben ist.

9. Behälter nach einem der Ansprüche 1 bis 8, **dadurch gekennzeichnet, dass** das Zentrum (17) von mehreren umlaufenden Versteifungsrippen (11) umgeben ist.

10. Behälter nach einem der Ansprüche 1 bis 9, **dadurch gekennzeichnet, dass** die Versteifungsrippen (11) im Wesentlichen kreisartig verlaufen.

11. Behälter nach einem der Ansprüche 1 bis 10, **dadurch gekennzeichnet, dass** die Versteifungsrippen (11) im Wesentlichen ovalartig verlaufen.

12. Behälter nach einem der Ansprüche 1 bis (11), **dadurch gekennzeichnet, dass** die Versteifungsrippen (11) im Wesentlichen rautenartig verlaufen.

13. Behälter nach einem der Ansprüche 1 bis 13, **dadurch gekennzeichnet, dass** die Versteifungsrippen (11) im Wesentlichen rechteckartig mit gerundeten Eckbereichen verlaufen.

14. Behälter nach einem der Ansprüche 1 bis 13, **dadurch gekennzeichnet, dass** drei Versteifungsrippen (11) im Bereich der Seitenwand (4) angeordnet sind.

15. Behälter nach Anspruch 10, **dadurch gekennzeichnet, dass** drei konzentrisch verlaufende kreisartige Versteifungsrippen (11) im Bereich der Seitenwand (4) angeordnet sind.
